# EUROPEAN PATENT APPLICATION

(11) **EP 1 569 439 A2**
(43) Date of publication of application: **31.08.2005**
(21) Application number: 05100644.3
(22) Date of filing: 31.01.2005
(51) Int. Cl.: H04N 5/225

(54) **A camcorder and a method of manufacturing the same**

(30) Priority: 28.02.2004 KR 2004013802
(71) Applicant: SAMSUNG ELECTRONICS CO., LTD., Gyeonggi-Do 442-742 (KR)
(72) Inventor: KIM, Ji-seok, Gweonseon-dong, Suwon-si, Gyeonggi-do (KR)
(74) Representative: Geary, Stuart Lloyd

(57) **Abstract**

An image photographing apparatus includes a deck assembly having a deck unit, a main board and a camera unit that are connected with each other. A first exterior assembly has a first exterior frame housing on one side of the deck assembly, and a door exposing the deck unit. A second exterior assembly has a display unit and a second exterior frame connected with the display unit. The second exterior assembly housing is positioned on the other side of the deck assembly. A front unit covers the front side of the deck assembly. A rear unit covers the rear side of the deck assembly.

## Description

The present invention relates to a camcorder comprising a deck, an image capture unit, a main circuit board and a housing and a method of manufacturing the same.

A recording and playback apparatus, such as a camcorder, is widely used to record and playback images and sounds of a subject to and from a recording medium, such as a magnetic tape.

The camcorder typically includes an external case which forms the external appearance, a lens unit (sometimes called a camera unit) for capturing the image of a subject, a deck unit for recording and/or playing back the captured image, and a display unit.

The exterior case includes a plurality of sections. Generally, the above units are assembled in the case, and then each section is assembled to form the camcorder.

The lens unit and deck unit are electrically connected to each other in the camcorder. This requires a plurality of circuit boards including a main board and a sub board to be configured in the external case. The main board is connected to the sub board as well as other boards which control each unit.

The deck unit operates to record and playback information on a recording medium, such as a cassette tape. The display unit includes a LCD panel which displays either the photographed or played back image, as well as a viewfinder. The LCD panel and the viewfinder are configured on the exterior case so that they can be viewed by a user, and are connected to the main board.

The camcorder consists of parts which have various complicated structures. This means that the assembling process is complicated and difficult. Accordingly, the cost of the camcorder is more expensive as production and assembly cost are high. Also, productivity is limited.

There is a need, therefore, for the simplification of the units making up the camcorder and of the assembling process.

The present invention has been conceived to address the above-mentioned problems occurring in the prior art, and an object of the present invention is to therefore provide a camcorder whose assembly is more simple and the method for assembling the same.

The present invention relates to a method of manufacturing a camcorder, the camera apparatus comprising a recording media deck, an image capture unit, a main circuit board and a housing.

A method according to the present invention is characterised by the main circuit board and the image capture unit being fixed to the deck to form a core unit before the core unit is enclosed in the housing.

Additional optional and preferred features are set forth in claim 2 appended hereto.

The present invention also relates to a camcorder comprising a deck, an image capture unit, a main circuit board and a housing.

A camcorder according to the present invention is characterised in that the main circuit board, the image capture unit and the deck are fixed together as a core unit whose unity is independent of the housing.

An embodiment of the present invention will now be described, by way of example only, and with reference to the accompanying drawings, in which:
Figure 1 is an exploded perspective view of a camcorder according to an embodiment of the present invention;
Figure 2 is an exploded perspective view of a deck unit shown in Figure 1;
Figure 3 is an exploded perspective view of the first exterior assembly shown in Figure 1;
Figure 4 is an exploded perspective view of the second exterior assembly shown in Figure 1;
Figure 5 is an exploded perspective view of a front unit shown in Figure 1;
Figure 6 is a rear perspective view of the front unit shown in Figure 5;
Figure 7 is a perspective view of the deck assembly assembled with the first exterior assembly shown in Figure 1;
Figure 8 is a perspective view of the deck assembly of Figure 7 assembled with the front unit;
Figure 9 is a perspective view of the deck assembly of Figure 8 assembled with the second exterior assembly; and
Figure 10 is a perspective view of an assembled camcorder according to an embodiment of the present invention.

Throughout the drawings, like reference numerals refer to like parts, components and structures.

The matters defined in the description, such as a detailed construction and elements thereof, are provided to assist in a comprehensive understanding of the invention. Thus, it is apparent that the present invention may be carried out without those defined matters. Also, for brevity, well-known functions or constructions are not described in detail.

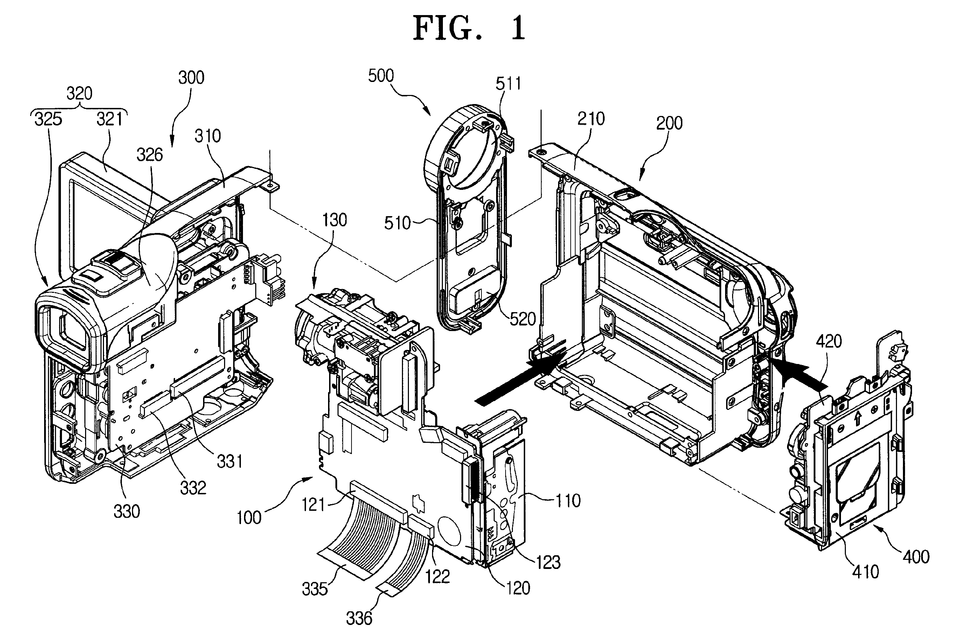

Referring to Figure 1, a camcorder includes a deck assembly 100, a first exterior assembly 200, a second exterior assembly 300, a front unit 400 and a rear unit 500.

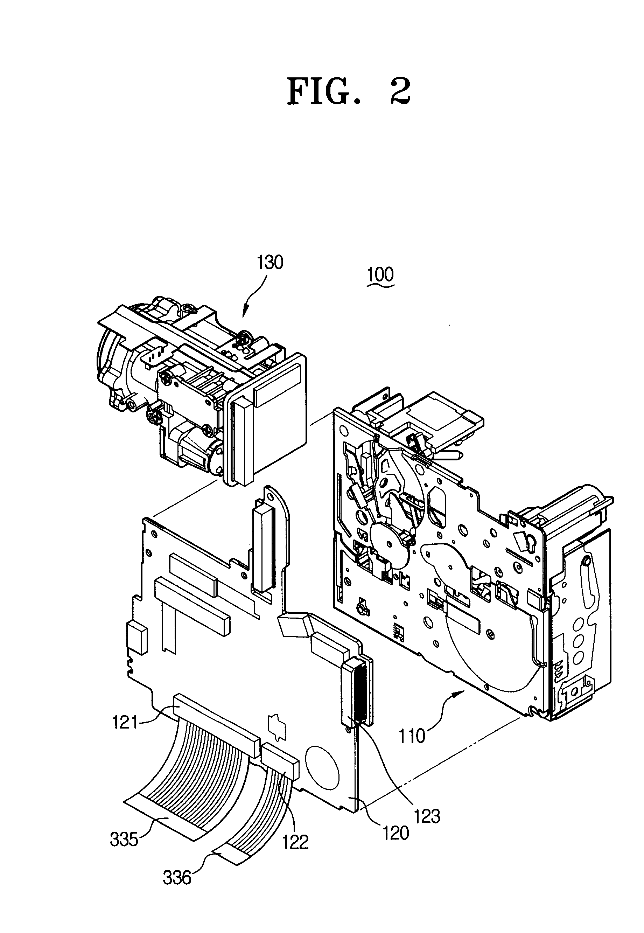

Referring to Figure 2, the deck assembly 100 includes a deck unit 110, a main board 120 and a camera unit 130. The deck unit 110 records and plays back image and, where appropriate, sound data to and from media such as a magnetic tape. The deck unit 110 is known, and may include such features as a 'moving deck', and therefore, a detailed description thereof is omitted. The main board 120 is connected with the base side of the deck unit 110. The main board 120 is connected to the deck unit 110 and transmits signals thereto. The main board provides a support to the camera unit 130. The camera unit 130 is located on the upper part of the main board 120 and inclined to one side, with the deck unit 110 and the main board 120 being positioned to stand substantially upright.

The camera unit 130 is connected to the main board 120 to transmit signals thereto. The main board 120 is connected to both the deck unit 110 and the camera unit 130 through circuit cables. The camera unit 130 captures the image using a known technique the detailed description of which is omitted.

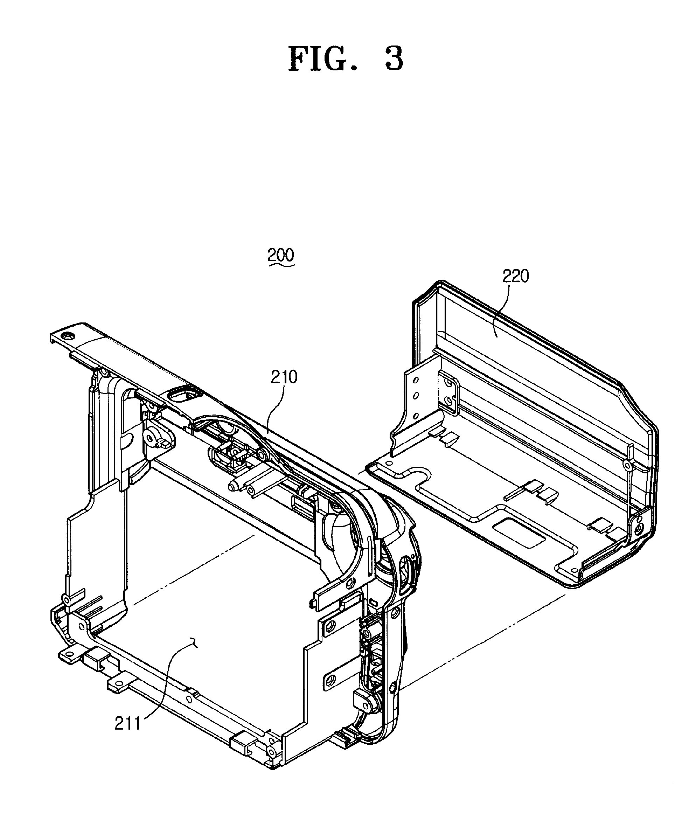

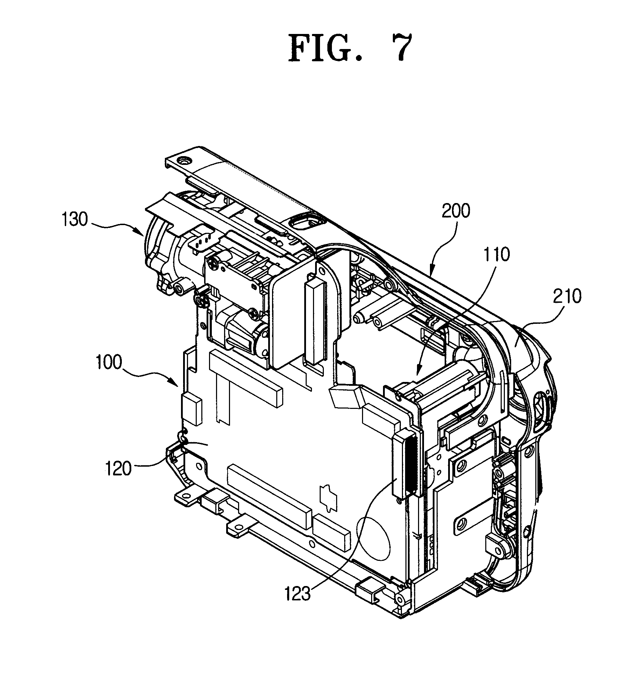

Referring to Figure 3, the first exterior assembly 200 includes the first exterior frame 210 which houses one side of the deck assembly 100. A door 220 is connected at the first exterior frame 210 in a hinged manner. The first exterior frame 210 is shaped to enclose and cover the deck unit 110 and the camera unit 130, and has an opening 211 adjoining the door 220. The deck unit 110 is accessible through the opening 211. In other words, the door 220 is connected to the first exterior frame 210 so that the opening 211 can be opened and closed. To insert a magnetic tape in the deck unit 110, the door 220 is opened, the tape inserted and the door 220 then closed. The deck assembly 100 is fitted into the first exterior assembly 200 so as to be in a sub-assembled condition, as shown in Figure 7.

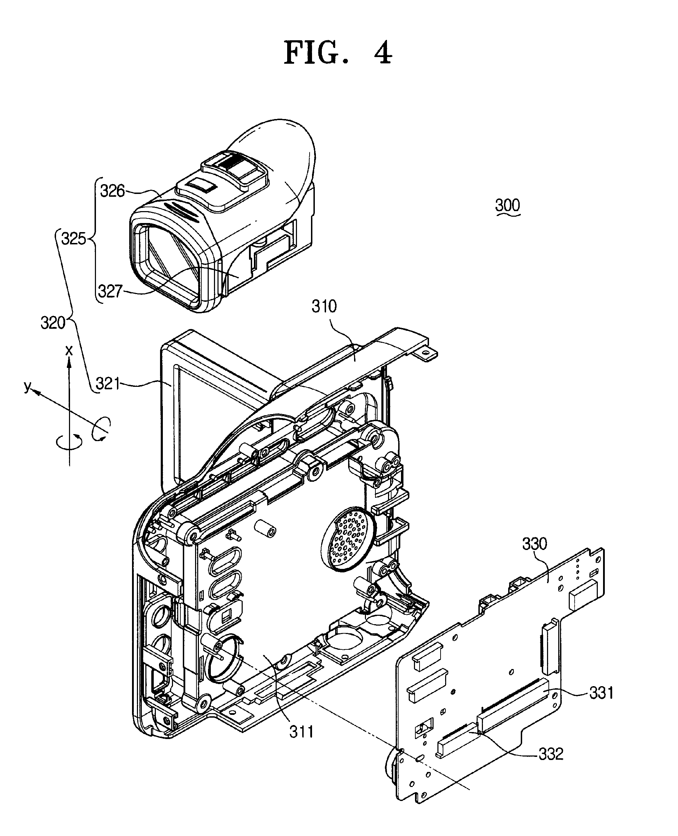

Referring to Figure 4, the second exterior assembly 300 includes the second exterior frame 310, a display unit 320 connected to the second exterior frame 310, and a sub board 330. The second exterior frame 310 corresponds to the first exterior frame, and covers the other side of the deck assembly 100. A panel mounting part 311 is recessed in the second exterior frame 310 so that the LCD panel 321 can be located therein, which is described below.

The display unit 320 includes an LCD panel 321 movably connected to the second exterior frame 310, and a viewfinder unit 325 engaged in the exterior frame 310. The LCD panel 321 is pivotable with respect to the second exterior frame 310 by certain angles with respect to the two perpendicular axes, x and y. The LCD panel 321 is housed in the panel mount part 311.

The viewfinder unit 325 includes a viewfinder cover 326 engaged in the upper part of the second exterior frame 310, and a viewfinder 327 engaged with the viewfinder cover 326. The viewfinder 327 displays the image that is photographed or played back by the camera unit 130 in a known manner.

The sub board 330 is engaged in the second exterior frame 310. The sub board 330 is connected to the LCD panel 321 and the viewfinder 327 to transmit signals thereto. The sub board 330 includes a plurality of connectors 331 and 332. The connectors 331 and 332 are connected to the connectors 121 and 122 on the main board 120 via the signal cables 335 and 336, before assembling the second exterior assembly 300 to the first exterior assembly 200.

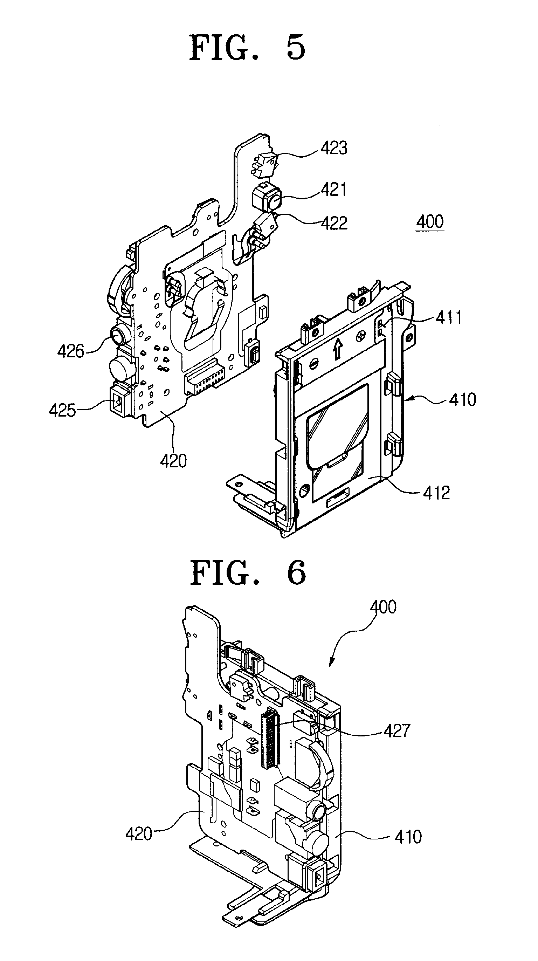

Referring to Figures 5 and 6, the front unit 400 includes a front frame 410, and a front board 420 engaged with the front frame 410. The front frame 410 covers the front part of the apparatus, in other words the deck assembly 100, at the same side as where the viewfinder unit 325 is located. The battery mount groove 412 has a terminal 411 facing outward of the front frame 410 to allow the battery to be mounted thereto. The front frame 410 is assembled with the first and second exterior frames 210 and 310. The front board 420 includes switches 421, 422 and 423 which correspond to a plurality of buttons allowing users to interact with the camcorder. Ports 425 and 426 are for inputting and outputting various signals. The front board 420 includes a connector 427 that is connected to the connector 123 (refer to Figure 2) of the main board 120, as shown in Figure 6. The front board 420 is directly connecting with the main board 120 (without using a separate signal cable) which allows the front board 420 to be supported by the main board 120.

Referring to Figure 1, the rear unit 500 covers the rear side of the apparatus, in other words, is located on the same side as the camera unit 130. The rear unit 500 includes a rear frame 510 assembled with the first and second exterior frames 210 and 310. A microphone 520 is connected to the rear frame 510. The rear frame 510 includes an opening 511 on the upper side which allows the lens of the camera unit to be exposed. A plurality of holes (not shown) are located in the lower part of the front facing side of rear frame 510 allowing sounds to be easily captured. The microphone 520 is located behind the holes, and is connected to the main board 120 using a cable (not shown).

As described above, a camcorder according to an embodiment of the present invention is assembled by five modular units, as shown in Figure 1. Each unit is assembled to produce the finished camcorder. The assembly process is described below.

First, assemblies 100, 200, 300, 400 and 500 are assembled and prepared as five modular units, as shown in Figure 1.

The deck assembly 100 is first placed into the first exterior assembly 200. As shown in Figure 7, the deck assembly 100 is housed in the first exterior assembly 200, enclosing one side of the deck assembly. The deck unit 110 is assembled so that it is adjacent the first exterior frame 210 so that it may be accessed using the door 220 connected to the first exterior frame 210.

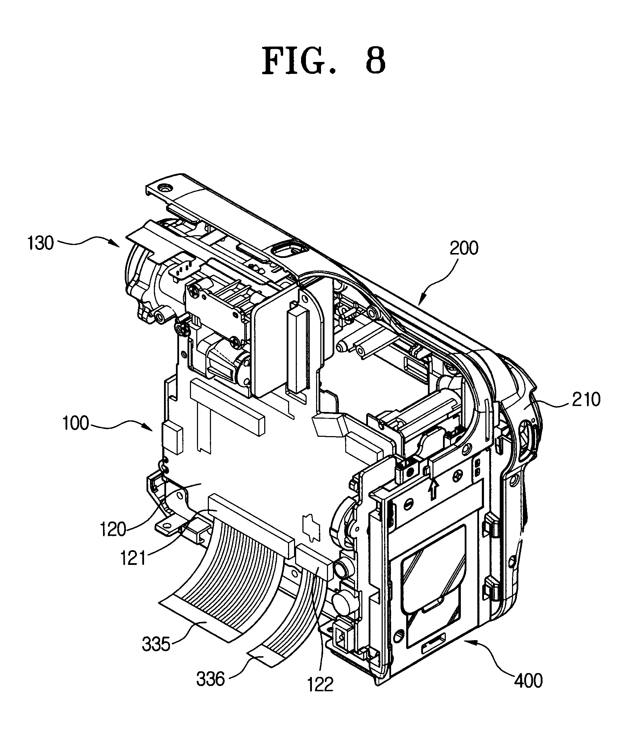

The front unit 400 is connected to the first exterior frame 210, as shown in Figure 8. The connector 421 located on the front panel 420 is coupled to the connector 123 of the main board 120.

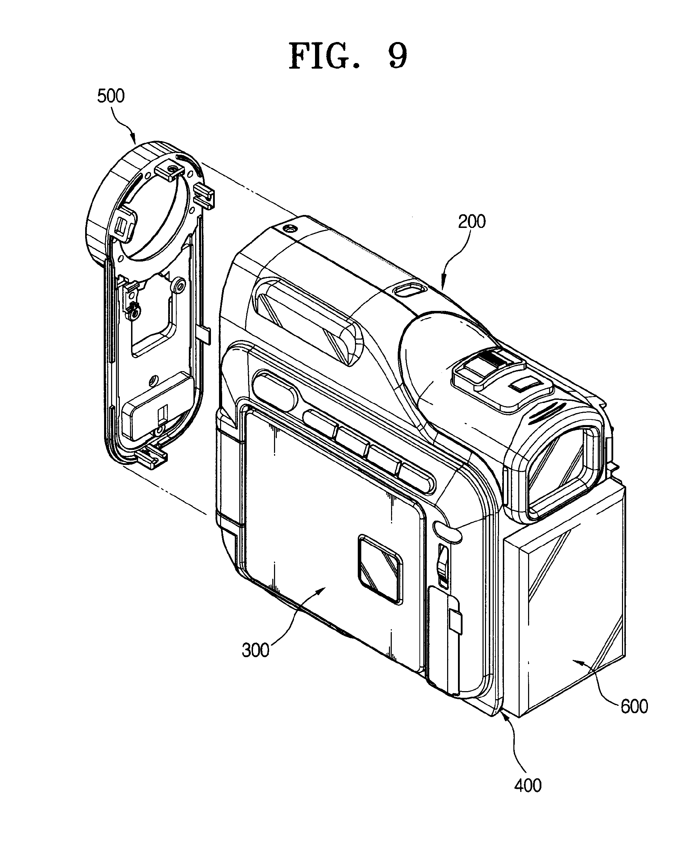

Prior to connecting the second exterior assembly 300 to the first exterior assembly 100, the signal cables 335 and 336 are connected to the sub board 330 of the second exterior assembly 300 using connectors 121 and 122 of the main board 120. Therefore, the sub board 330 is connected to the main board 120. As described above, the boards 120 and 320 are connected, and then the second exterior assembly 300 is connected to the first exterior assembly 100, as shown in Figure 9.

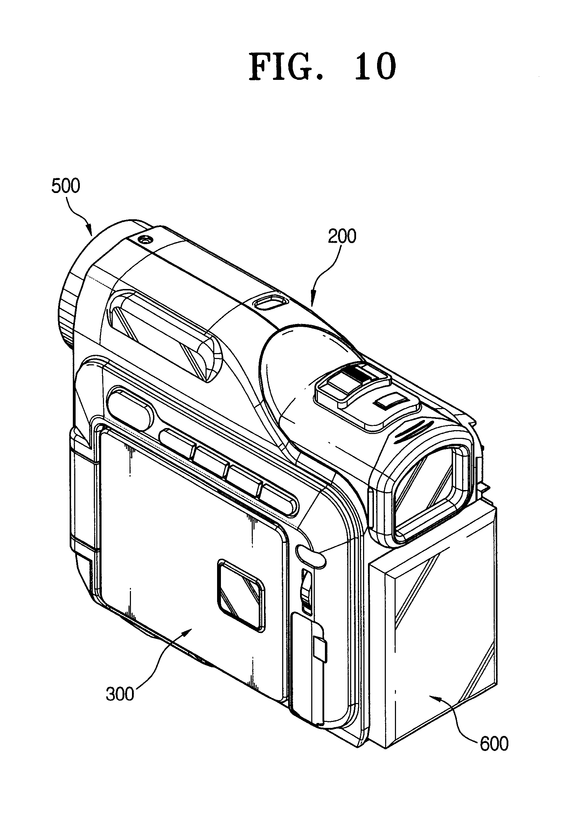

When the rear unit 500 is connected to the rear of the frames 210 and 310 as shown in Figure 9. The resultant camcorder is shown in Figure 10. The microphone 520 is connected to the main board 120. To ensure that the four assemblies and units 200, 300, 400 and 500 remain secured to one another, the assemblies and units 100, 200, 300, 400 and 500 are fastened by a plurality of screws (not shown) to complete the assembly process. Figures 9 and 10 are views of the camcorder having a battery 600 on the front unit 400.

As described above, if the camcorder and the method for assembling the same are used, each part of the camcorder is divided into pre-assembled modular units which are assembled one by one. Therefore, simplifying the assembly process.

Since each modular unit is assembled in predetermined process ensuring that correct connections are made between the main board and various parts, incorrect assembly is less likely to occur.

Because the image photographing apparatus is divided by five modular units, the apparatus may be easily repaired and parts replaced as necessary.

## Claims

1. A method of manufacturing a camcorder, the camera apparatus comprising a recording media deck (110), an image capture unit (130), a main circuit board (120) and a housing (200,300,400,500), the method being **characterised by** the main circuit board (120) and the image capture unit (130) being fixed to the deck (110) to form a core unit (100) before the core unit (100) is enclosed in the housing (200,300,400,500).

2. A method of manufacturing a camcorder according to claim 1, wherein the core unit (100) comprises a view finder unit (320) connected thereto.

3. A camcorder comprising a deck (110), an image capture unit (130), a main circuit board (120) and a housing (200,300,400,500), the camcorder being **characterised in that** the main circuit board (120), the image capture unit (130) and the deck (110) are fixed together as a core unit (100) whose unity is independent of the housing (200,300,400,500).

4. An image photographing apparatus, comprising:
a deck assembly having a deck unit, a main board and a camera unit, each being connected with each other;
a first exterior assembly having a first exterior frame housing on one side of the deck assembly, and a door adapted to expose the deck unit;
a second exterior assembly having a display unit and a second exterior frame connected with the display unit, the second exterior assembly housing being positioned on another side of the deck assembly;
a front unit covering the front side of the deck assembly; and
a rear unit covering the rear side of the deck assembly.

5. The image photographing apparatus according to claim 4, wherein the main board is connected with the deck unit, the camera unit is supported by the main board, and the camera unit and the deck unit are each electrically connected with the main board.

6. The image photographing apparatus according to claim 4, wherein
the display unit comprises an LCD panel movably connected to an outer side of the second exterior frame; and
a viewfinder unit connected inside of the second exterior frame and aligned with the camera unit in a substantially symmetrical manner.

7. The image photographing apparatus according to claim 4, wherein the second exterior assembly is supported by the second exterior frame, and includes a sub board electrically connected to the display unit.

8. The image photographing apparatus according to claim 7, wherein the sub board is electrically connected to the main board.

9. The image photographing apparatus according to claim 6, wherein
the viewfinder unit includes a viewfinder cover connected with the second exterior frame; and
a viewfinder supported by the viewfinder cover and connected with the second exterior frame.

10. The image photographing apparatus according to claim 4, wherein
the front unit includes a front board electrically connected to the main board; and
a front frame connected with the front board, and the first and second exterior frames.

11. The image photographing apparatus according to claim 10, wherein the front unit is assembled to the first exterior assembly and the deck assembly when the deck assembly has been connected to the first exterior assembly.

12. The image photographing apparatus according to claim 10, wherein the front board is be directly and electrically connected to the main board.

13. The image photographing apparatus according to claim 4, wherein
the rear unit includes a rear frame having an opening to expose the camera unit; and
a microphone supported by the rear frame, the rear unit being connected to both the first and second exterior assemblies after the first and second exterior assemblies are connected.

14. A method of assembling an image photographing apparatus, comprising the steps of:
preparing a deck assembly, first and second exterior assemblies, a front unit and a rear unit of the image photographing apparatus
connecting a deck unit, a main board and a camera unit of the deck assembly to each other;
connecting the first exterior assembly having a first exterior frame housing and a door adapted to expose the deck unit to the deck assembly, the first exterior assembly covering a first side of the deck assembly;
connecting the second exterior assembly having a display unit and a second exterior frame connected with the display unit to the first exterior assembly and to the deck assembly, the second exterior assembly covering a second side of the deck assembly;
connecting the front unit to the assembled deck assembly and first and second exterior assemblies to cover a front side of the deck assembly; and
connecting the rear unit to the assembled deck assembly, first and second exterior assemblies and front unit to cover a rear side of the deck assembly.

15. The method of claim 14, further comprising
electrically connecting a sub board with the display unit; and
electrically connecting the sub board and the main board prior to assembling the first exterior assembly to the second exterior assembly.

16. The method of claim 15, further comprising connecting the main board and the sub board by a signal cable.

17. The method of claim 14, further comprising:
supporting a front board with a front frame;
connecting the front frame supporting the front board to the second exterior frame; and
connecting the front board to the main board.

18. The method of claim 14, further comprising connecting a battery to the front unit.

19. The method of claim 14, further comprising:
supporting a microphone on the rear unit; and
connecting the microphone to the main board.
